# EUROPEAN PATENT SPECIFICATION

(11) **EP 2 705 667 B1**
(45) Date of publication and mention of the grant of the patent: **21.09.2016**
(21) Application number: 12733580.0
(22) Date of filing: 29.06.2012
(51) Int. Cl.: H04N 19/176, H04N 19/147, H04N 19/46, H04N 19/61, H04N 19/593, H04N 19/103, H04N 19/12, H04N 19/154, H04N 19/90

(54) **LOSSLESS CODING AND ASSOCIATED SIGNALING METHODS FOR COMPOUND VIDEO**
VERLUSTLOSE KODIERUNG UND ZUGEHÖRIGES SIGNALISIERUNGSVERFAHREN FÜR EIN ZUSAMMENGESETZTES VIDEO
CODAGE SANS PERTE ET PROCÉDÉS DE SIGNALISATION ASSOCIÉS POUR VIDÉO COMPOSITE

(30) Priority: 30.06.2011 US 201161503534 P
(43) Date of publication of application: 12.03.2014
(73) Proprietor: Huawei Technologies Co., Ltd., Longgang District Shenzhen, Guangdong 518129 (CN)
(72) Inventor: GAO, Wen, West Windsor, NJ 08550 (US); COOK, Gregory, San Jose, CA 95123 (US); YANG, Mingyuan, Shenzhen Guangdong 518129 (CN); YU, Haoping, Carmel, IN 46032 (US)
(74) Representative: Pfenning, Meinig & Partner mbB
(86) International application number: PCT/US2012/045133
(87) International publication number: WO 2013/003823

(56) References cited:
- WO-A2-2010/002122
- TAKAMURA S ET AL: "H.264-based Lossless Video Coding Using Adaptive Transforms", 2005 IEEE INTERNATIONAL CONFERENCE ON ACOUSTICS, SPEECH, AND SIGNAL PROCESSING - 18-23 MARCH 2005 - PHILADELPHIA, PA, USA, vol. 2, 18 March 2005 (2005-03-18), pages 301-304, XP010790636, IEEE, PISCATAWAY, NJ DOI: 10.1109/ICASSP.2005.1415401 ISBN: 978-0-7803-8874-1
- YUNG-LYUL LEE ET AL: "Improved lossless intra coding for H.264/MPEG-4 AVC", IEEE TRANSACTIONS ON IMAGE PROCESSING , vol. 15, no. 9 1 September 2006 (2006-09-01), pages 2610-2615, XP008155305, IEEE SERVICE CENTER, PISCATAWAY, NJ, US ISSN: 1057-7149, DOI: 10.1109/TIP.2006.877396 Retrieved from the Internet: URL:http://ieeexplore.ieee.org/xpls/abs_al l.jsp?arnumber=1673442&tag=1 [retrieved on 2012-10-23]
- MING L ET AL: "Advanced technologies for high-performance video coding", 4TH INTERNATIONAL CONFERENCE ON COMMUNICATIONS AND NETWORKING IN CHINA, CHINACOM 2009, [Online] 26 August 2009 (2009-08-26), - 28 August 2009 (2009-08-28), pages 1-5, XP002685713, IIEE COMPUTER SOCIETY, USA DOI: 10.1109/CHINACOM.2009.5339856 Retrieved from the Internet: URL:http://ieeexplore.ieee.org/xpl/article Details.jsp?arnumber=5339856> [retrieved on 2012-10-23]
- SULLIVAN G J ET AL: "The H.264/AVC advanced video coding standard: Overview and introduction to the fidelity range extensions", PROCEEDINGS OF SPIE - THE INTERNATIONAL SOCIETY FOR OPTICAL ENGINEERING - APPLICATIONS OF DIGITAL IMAGE PROCESSING XXVII 2004, [Online] vol. 5558, no. PART 1, 2004, pages 454-474, XP002685712, SPIE US DOI: 10.1117/12.564457 Retrieved from the Internet: URL:http://proceedings.spiedigitallibrary. org/proceeding.aspx?articleid=850444> [retrieved on 2012-10-23]
- GAO W ET AL: "Near Lossless Coding for Screen Content", 97. MPEG MEETING; 18-7-2011 - 22-7-2011; TORINO; (MOTION PICTURE EXPERT GROUP OR ISO/IEC JTC1/SC29/WG11),, no. m20997, 7 June 2012 (2012-06-07), XP030049560,
- WENPENG DING ET AL: "Enable Efficient Compound Image Compression in H.264/AVC Intra Coding", IMAGE PROCESSING, 2007. ICIP 2007. IEEE INTERNATIONAL CONFERENCE ON, IEEE, PI, 1 September 2007 (2007-09-01), pages II-337, XP031157930, ISBN: 978-1-4244-1436-9
- SHUHUI WANG ET AL: "A Unified LZ and Hybrid Coding for Compound Image Partial-Lossless Compression", IMAGE AND SIGNAL PROCESSING, 2009. CISP '09. 2ND INTERNATIONAL CONGRESS ON, IEEE, PISCATAWAY, NJ, USA, 17 October 2009 (2009-10-17), pages 1-5, XP031552799, ISBN: 978-1-4244-4129-7

## Description

### BACKGROUND

The amount of video data needed to depict even a relatively short film can be substantial, which may result in difficulties when the data is to be streamed or otherwise communicated across a communications network with limited bandwidth capacity. Thus, video data is generally compressed prior to being communicated across modem day telecommunications networks. Video compression devices often use software and/or hardware at the source to code the video data prior to transmission, thereby decreasing the quantity of data needed to represent digital video images. The compressed data is then received at the destination by a video decompression device that decodes the video data. With limited network resources and ever increasing demands of higher video quality, improved compression and decompression techniques that improve image quality without increasing bit-rates are desirable.

Paper titled "H.264-based lossless video coding using adaptive transforms" (Takamura S ET AL) 2005 IEEE international conference on acoustics, discloses a H.264-Based lossless video coding using adaptive transforms scheme, which provides a fixed version and adaptive version according to the value of a constant based on the H.264 FRExt. In H.264 FRExt, it adopts the technique of skipping the application of both transform and quantization processes to the residual signals and directly passing them to entropy coder. According to the proposed method in the paper, depend on the value of a constant, transform is implemented or not according to the adaptive version. The paper also discloses the lossless code scheme, for example, the verbatim signal (H.264 FRExt) at section 2.2, piecewise scaled transform as section 2.3, reversible DCT at section 2.4, an fixed and d the adaptive version at section 3.1 and 3.2 respectively.

Paper titled "Enable Efficient Compound Image Compression in H.264/AVC Intra Coding" (TENPENG DING ET AL), 2007 IEEE international conference, discloses that the text blocks are distinguished from the picture blocks and compressed with a new mode. Transformation such as DCT and wavelet are usually used to represent natural images. The transform-domain representations are not very suitable for the context with complex structures such as the text content. A spatial domain representation is used for the text blocks, which describes text blocks using several base colours and an index map. The index map indicates the structure information of a text block. A colour quantization algorithm is designed to generate the representation, followed by the structure-aware context-adaptive arithmetic coding.

Paper titled "A Unified LZ and Hybrid Coding for Compound Image Partial-Lossless Compression" (SHUHUI WANG ET AL), 2009 2nd international congress on IEEE PISCATAWAY, discloses that each macroblock is first coded simultaneously by both H.264 and gzip, then rate-distortion optimization is used to select either H.264 coding or gzip coding as the final coding of the macroblock. The compound picture includes text/graphics and natural pictures. For compressing text/graphics, lossless mode is more suitable than the lossy mode. A partial lossless compression is lossless for the most text and graphics region and near-lossless for the natural region. By classifying the blocks, different types of blocks can be compressed by the most effective way.

### SUMMARY

In one embodiment, the disclosure includes an apparatus used in video encoding comprising a processor configured to receive a video frame comprises a compound video, select at least one region containing text and/or graphics in the video frame, bypass a quantization step in encoding of the at least one region, for a current block in the at least one region generate a prediction block, subtract the current block by the prediction block to generate a residual block, selectively bypass a transform step in encoding of the residual block, and encoding another region containing natural-view content in the video frame using a lossy mode. The residual block comprises a plurality of residual values; and the processor is further configured to: if the transform step is bypassed, perform entropy encoding on at least a portion of the plurality of residual values to generate encoded residual values; otherwise, transform the residual block to a transform matrix comprising a plurality of transform coefficients; and perform entropy encoding on the plurality of transform coefficients to generate a plurality of encoded transform coefficients. The processor is further configured to: transmit the encoded at least one region in a bitstream; and add region indication information to a syntax of the bitstream, wherein the region indication information identifies the at least one region. The processor is further configured to: set at least one transform bypass flag for the current block; perform entropy encoding on the at least one transform bypass flag to generate at least one encoded transform bypass flag; and add the at least one encoded transform bypass flag to the bitstream. Performing entropy encoding on the at least one transform bypass flag includes using three context models for each of the at least one transform bypass flag, and the three context models are selectable via an index equal to a sum of a first transform bypass flag belonging to an upper block of the current block and a second transform bypass flag belonging to a left block of the current block.

In another embodiment, the disclosure includes a method used in video encoding comprising receiving a video frame comprises a compound video, selecting at least one region containing text and/or graphics in the video frame, bypassing a quantization step in encoding of the at least one region, for a current block in the at least one region generating a prediction block, subtracting the current block by the prediction block to generate a residual block, selectively bypassing a transform step in encoding of the residual block, and encoding another region containing natural-view content in the video frame using a lossy mode. The residual block comprises a plurality of residual values, and the method further comprises: if the transform step is bypassed, performing entropy encoding on at least a portion of the plurality of residual values to generate encoded residual values; otherwise, transforming the residual block to a transform matrix comprising a plurality of transform coefficients; and performing entropy encoding on the transform coefficient to generate plurality of transform coefficients to generate a plurality of encoded transform coefficients; transmitting the encoded at least one region in a bitstream; and adding region indication information to a syntax of the bitstream, wherein the region indication information identifies the at least one region. The method further comprising: setting at least one transform bypass flag for the current block; performing entropy encoding on the at least one transform bypass flag to generate at least one encoded transform bypass flag; and adding the at least one encoded transform bypass flag to the bitstream. Performing entropy encoding on the at least one transform bypass flag includes using three context models for each of the at least one transform bypass flag, and the three context models are selectable via an index equal to a sum of a first transform bypass flag belonging to an upper block of the current block and a second transform bypass flag belonging to a left block of the current block.

In yet another embodiment, the disclosure includes an apparatus used in video encoding comprising a processor configured to generate a residual block for a current block, wherein the residual block comprises a plurality of residual values, determine whether to bypass a transform step in encoding of the residual block based on a rate-distortion optimization (RDO) process, set at least one transform bypass flag for the current block, perform entropy encoding on the at least one transform bypass flag to generate at least one encoded transform bypass flag, and if the transform step is bypassed perform entropy encoding on at least a portion of the plurality of residual values to generate encoded residual values, otherwise if the transform step is not bypassed transform the residual block to a transform matrix comprising a plurality of transform coefficients, and perform entropy encoding on the plurality of transform coefficients to generate a plurality of encoded transform coefficients.

These and other features will be more clearly understood from the following detailed description taken in conjunction with the accompanying drawings and claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 is a schematic diagram of an embodiment of a transform bypass encoding scheme.
FIG. 2 is a schematic diagram of an embodiment of a transform bypass decoding scheme.
FIG. 3 is a schematic diagram of an embodiment of a transform without quantization encoding scheme.
FIG. 4 is a schematic diagram of an embodiment of a transform without quantization decoding scheme.
FIG. 5 is a schematic diagram of an embodiment of a lossy encoding scheme.
FIG. 6 is a schematic diagram of an embodiment of a lossy decoding scheme.
FIG. 7 is a flowchart of an embodiment of an encoding method.
FIG. 8 is a flowchart of an embodiment of a decoding method.
FIG. 9 is a schematic diagram of an embodiment of a network unit.
FIG. 10 is a schematic diagram of a general-purpose computer system.

### DETAILED DESCRIPTION

It should be understood at the outset that, although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents. Typically, video media involves displaying a sequence of still images or frames in relatively quick succession, thereby causing a viewer to perceive motion. Each frame may comprise a plurality of picture elements or pixels, each of which may represent a single reference point in the frame. During digital processing, each pixel may be assigned an integer value (e.g., 0, 1, ... or 255) that represents an image quality or characteristic, such as luminance or chrominance, at the corresponding reference point. In use, an image or video frame may comprise a large amount of pixels (e.g., 2,073,600 pixels in a 1920×1080 frame), thus it may be cumbersome and inefficient to encode and decode (referred to hereinafter simply as code) each pixel independently. To improve coding efficiency, a video frame is usually broken into a plurality of rectangular blocks or macroblocks, which may serve as basic units of processing such as prediction, transform, and quantization. For example, a typical NxN block may comprise N² pixels, where N is an integer greater than one and is often a multiple of four.

In a working draft of the International Telecommunications Union (ITU) Telecommunications Standardization Sector (ITU-T) and the International Organization for Standardization (ISO)/International Electrotechnical Commission (IEC), High Efficiency Video Coding (HEVC), which is poised to be the next video standard, new block concepts have been introduced. For example, coding unit (CU) may refer to a sub-partitioning of a video frame into rectangular blocks of equal or variable size. In HEVC, a CU may replace macroblock structure of previous standards. Depending on a mode of inter or intra prediction, a CU may comprise one or more prediction units (PUs), each of which may serve as a basic unit of prediction. For example, for intra prediction, a 64x64 CU may be symmetrically split into four 32x32 PUs. For another example, for an inter prediction, a 64x64 CU may be asymmetrically split into a 16x64 PU and a 48x64 PU. Similarly, a PU may comprise one or more transform units (TUs), each of which may serve as a basic unit for transform and/or quantization. For example, a 32x32 PU may be symmetrically split into four 16x16 TUs. Multiple TUs of one PU may share a same prediction mode, but may be transformed separately. Herein, the term block may generally refer to any of a macroblock, CU, PU, or TU. Depending on the application, a block may be coded in either a lossless mode (i.e., no distortion or information loss) or a lossy mode (i.e., with distortion). In use, high quality videos (e.g., with YUV subsampling of 4:4:4) may be coded using a lossless mode, while low quality videos (e.g., with YUV subsampling of 4:2:0) may be coded using a lossy mode. Sometimes, a single video frame or slice (e.g., with YUV subsampling of either 4:4:4 or 4:2:0) may employ both lossless and lossy modes to code a plurality of regions, which may be rectangular or irregular in shape. Each region may comprise a plurality of blocks. For example, a compound video may comprise a combination of different types of contents, such as texts, computer graphics, and natural-view content (e.g., camera-captured video). In a compound frame, regions of texts and graphics may be coded in a lossless mode, while regions of natural-view content may be coded in a lossy mode. Lossless coding of texts and graphics may be desired, e.g. in computer screen sharing applications, since lossy coding may lead to poor quality or fidelity of texts and graphics, which may cause eye fatigue. Current HEVC test models (HMs), such as HM 3.0, may code natural-view content fairly efficiently. However, the current HMs may lack a lossless coding mode, thus their coding efficiency for certain videos (e.g., compound video) may be limited. Even at a highest quality setting with a quantization parameter (QP) set to zero, coding efficiency may still be less than satisfactory.

Disclosed herein are systems and methods for improved video coding. The disclosure provides a lossless coding mode, which may complement a lossy coding mode in coding of a video such as a compound video. The lossless mode may include a transform bypass coding scheme and a transform without quantization coding scheme. In the transform bypass scheme, both transform and quantization steps are skipped, thus a residual block is directly coded using an entropy encoder. In the transform without quantization scheme, transform is included but quantization is bypassed. In an embodiment of a transform without quantization scheme, if a transform algorithm is not fully reversible, slight distortion or information loss may be induced, which may also be referred to near lossless. In use, based on content of a video frame or slice, some regions (e.g., containing text and/or graphics) may be coded in a lossless mode, and other regions (e.g., containing natural-view content) may be coded in a lossy mode. To allow proper decoding of an encoded video frame, the disclosure may include region indication information to a high level syntax of a bitstream, which may signal one or more lossless encoding regions and/or lossy encoding regions. Furthermore, for a block (e.g., a PU or TU) in a lossless encoding region, the disclosure may set one or two transform bypass flags for luminance and chrominance pixels to indicate whether the transform is bypassed in the encoding process. The transform bypass flags may be entropy encoded and incorporated into the bitstream. Based on information contained in the bitstream, a video decoder may accordingly reconstruct the video frame.

In use, there may be a module before an encoder to analyze contents of a video frame, and identify certain regions (e.g., texts and/or graphics regions) where lossless encoding is desired. Information or instructions regarding which regions to encode in a lossless mode may be passed to the encoder. Based on the information, the encoder may encode the identified regions using the lossless mode. Alternatively, a user may manually define certain regions to be encoded using a lossless mode, and provide the encoder with information identifying these regions. Thus, a video (e.g., a compound video) may be encoded in a lossless mode and/or a lossy mode, depending on information received by the encoder. Herein, the lossless encoding mode may include transform bypass encoding and transform without quantization encoding. These two lossless encoding schemes as well as a lossy encoding scheme are described herein.

Likewise, based on information contained in a received bitstream, a video decoder may decode a video frame using a lossless mode and/or a lossy mode. The lossless decoding mode may include transform bypass decoding and transform without quantization decoding. The two lossless decoding schemes as well as a lossy decoding scheme are described herein.

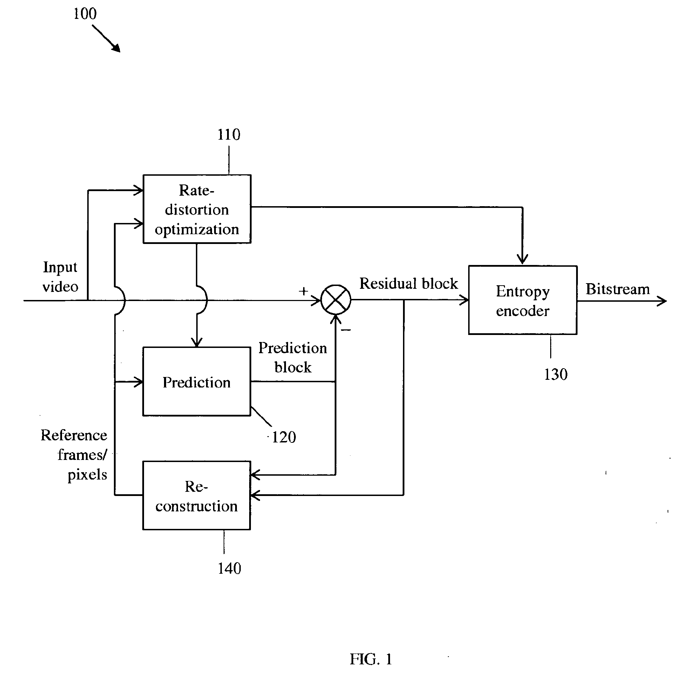

FIG. 1 illustrates an embodiment of a transform bypass encoding scheme 100, which may be implemented in a video encoder. The transform bypass encoding scheme 100 may comprise a rate-distortion optimization (RDO) module 110, a prediction module 120, an entropy encoder 130, and a reconstruction module 140 arranged as shown in FIG. 1. In operation, an input video comprising a sequence of video frames (or slices) may be received by the encoder. Herein, a frame may refer to any of a predicted frame (P-frame), an intra-coded frame (I-frame), or a bi-predictive frame (B-frame). Likewise, a slice may refer to any of a P-slice, an I-slice, or a B-slice.

The RDO module 110 may be configured to make logic decisions for one or more of other modules. In an embodiment, based on one or more previously encoded frames, the RDO module 110 may determine how a current frame (or slice) being encoded is partitioned into a plurality of CUs, and how a CU is partitioned into one or more PUs and TUs. For example, homogeneous regions of the current frame (i.e., no or slight difference among the pixel values in the regions) may be partitioned into relatively larger blocks, and detailed regions of the current frame (i.e., significant difference among the pixel values in the regions) may be partitioned into relatively smaller blocks.

In addition, the RDO module 110 may control the prediction module 120 by determining how the current frame is predicted. The current frame may be predicted via inter and/or intra prediction. Inter prediction (i.e., inter frame prediction) may exploit temporal redundancies in a sequence of frames, e.g. similarities between corresponding blocks of successive frames, to reduce compression data. In inter prediction, the RDO module 110 may determine a motion vector of a block in the current frame based on a corresponding block in one or more reference frames. On the other hand, intra prediction may exploit spatial redundancies within a single frame, e.g., similarities between adjacent blocks, to reduce compression data. In intra prediction, reference pixels adjacent to a current block may be used to generate a prediction block. Intra prediction (i.e., intra frame prediction) may be implemented using any of a plurality of available prediction modes or directions (e.g., 35 modes for luma components in HEVC), which may be determined by the RDO module 110. For example, the RDO module 110 may calculate a sum of absolute error (SAE) for each prediction mode, and select a prediction mode that results in the smallest SAE.

Based on logic decisions made by the RDO module 110, the prediction module 120 may utilize either one or more reference frames (inter prediction) or a plurality of reference pixels (intra prediction) to generate a prediction block, which may be an estimate of a current block. Then, the current block may be subtracted by the prediction block, thereby generating a residual block. The residual block may comprise a plurality of residual values, each of which may indicate a difference between a pixel in the current block and a corresponding pixel in the prediction block. Then, all values of the residual block may be scanned and encoded by the entropy encoder 130 into an encoded bitstream. The entropy encoder 130 may employ any entropy encoding scheme, such as context-adaptive binary arithmetic coding (CABAC) encoding, exponential Golomb encoding, or fixed length encoding, or any combination thereof. In the transform bypass encoding scheme 100, since the residual block is encoded without a transform step or a quantization step, no information loss may be induced in the encoding process.

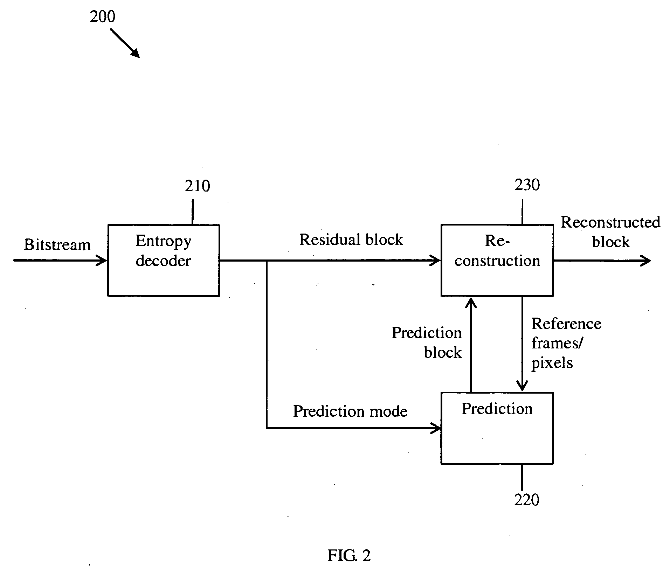

To facilitate continuous encoding of video frames, the residual block may also be fed into the reconstruction module 140, which may generate either reference pixels for intra prediction of future blocks or reference frames for inter prediction of future frames. If desired, filtering may be performed on the reference frames/pixels before they are used for inter/intra prediction. A person skilled in the art is familiar with the functioning of the prediction module 120 and the reconstruction module 140, so these modules will not be further described. It should be noted that FIG. 1 may be a simplified illustration of a video encoder, thus it may only include a portion of modules present in the encoder. Other modules (e.g., filter, scanner, and transmitter), although not shown in FIG. 1, may also be included to facilitate video encoding. Prior to transmission from the encoder, the encoded bitstream may be further configured to include other information, such as video resolution, frame rate, block partitioning information (sizes, coordinates), prediction modes, etc., so that the encoded sequence of video frames may be properly decoded. FIG. 2 illustrates an embodiment of a transform bypass decoding scheme 200, which may be implemented in a video decoder. The transform bypass decoding scheme 200 may correspond to the transform bypass encoding scheme 100, and may comprise an entropy decoder 210, a prediction module 220, and a reconstruction module 230 arranged as shown in FIG. 2. In operation, an encoded bitstream containing information of a sequence of video frames may be received by the entropy decoder 210, which may decode the bitstream to an uncompressed format. The entropy decoder 210 may employ any entropy decoding scheme, such as CABAC decoding, exponential Golomb decoding, or fixed length encoding, or any combination thereof.

For a current block being decoded, a residual block may be generated after the execution of the entropy decoder 210. In addition, information containing a prediction mode of the current block may also be decoded by the entropy decoder 210. Then, based on the prediction mode, the prediction module 220 may generate a prediction block for the current block based on the previously decoded blocks or frames. If the prediction mode is an inter mode, one or more previously decoded reference frames may be used to generate the prediction block. Otherwise, if the prediction mode is an intra mode, a plurality of previously decoded reference pixels may be used to generate the prediction block. Then, the reconstruction module 230 may combine the residual block with the prediction block to generate a reconstructed block. Additionally, to facilitate continuous decoding of video frames, the reconstructed block may be used in a reference frame to inter predict future frames. Some pixels of the reconstructed block may also serve as reference pixels for intra prediction of future blocks in the same frame.

In use, if an original block is encoded and decoded using lossless schemes, such as the transform bypass encoding scheme 100 and the transform bypass decoding scheme 200, no information loss may be induced in the entire coding process. Thus, barring distortion caused during transmission, a reconstructed block may be exactly the same with the original block. This high fidelity of coding may improve a user's experience in viewing video contents such as texts and graphics.

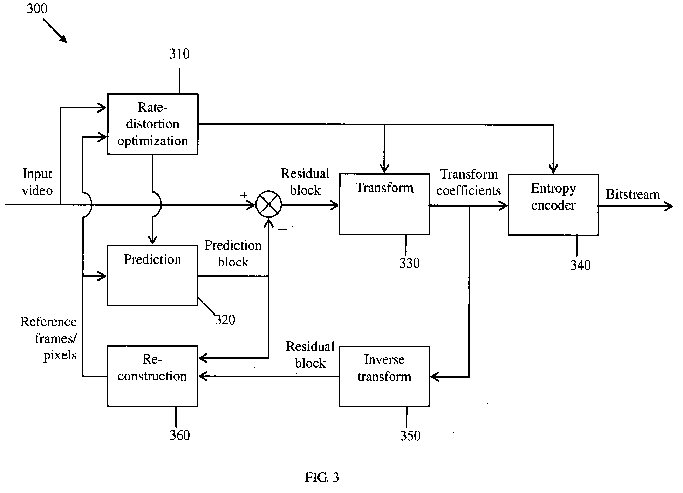

During lossless coding of certain regions in a video frame, sometimes it may be desirable to include a transform step into the coding process. For example, for some blocks of a text region, an added transform step may generate a shorter bitstream compared to a transform bypass coding scheme. In an embodiment, a RDO module may be configured to determine whether to include the transform step. For example, a test transform may be performed to convert a residual block to a matrix of transform coefficients. If a number of bits needed to encode transform coefficients may be smaller compared to a number of bits needed to encode residual values in the residual block, the transform step may be included. Otherwise, the transform step may be bypassed. FIG. 3 illustrates an embodiment of a transform without quantization encoding scheme 300, which may comprise a RDO module 310, a prediction module 320, a transform module 330, an entropy encoder 340, an inverse transform module 350, and a reconstruction module 360. Some aspects of the transform without quantization encoding scheme 300 may be the same or similar to the transform bypass encoding scheme 100 in FIG. 1, thus the similar aspects will not be further described in the interest of clarity.

The transform without quantization encoding scheme 300 may be implemented in a video encoder, which may receive an input video comprising a sequence of video frames. The RDO module 310 may be configured to control one or more of other modules, and may be the same or similar to the RDO module 110 in FIG. 1. Based on logic decisions made by the RDO module 310, the prediction module 320 may utilize either reference frames (inter prediction) or reference pixels (intra prediction) to generate a prediction block, which is an estimate of a current block. Then, the current block may be subtracted by the prediction block, thereby generating a residual block. The prediction module 320 may be the same or similar to the prediction module 120 in FIG. 1. Instead of being entropy encoded directly, the residual block in the transform without quantization encoding scheme 300 may be first transformed from a spatial domain to a frequency domain by the transform module 330. The transform module 330 may convert the values of the residual block (i.e., residual values) to a transform matrix comprising a plurality of transform coefficients. The transform module 330 may be implemented using any appropriate algorithm, such as a discrete cosine transform (DCT), a fractal transform (FT), or a discrete wavelet transform (DWT). In use, some algorithms, such as a 4x4 integer transform defined in H.264/advanced video coding (AVC), may not induce any information loss, while other algorithms, such as an 8x8 integer DCT transform defined in the HEVC working draft, may induce slight information loss. For example, since the 8x8 integer DCT transform in HEVC may not be fully reversible, recovered values of the residual block after the inverse transform module 350 may be slightly different (e.g., up to ±2 values) from the original values of the residual block before the transform module 330. When slight information loss is induced, the encoding may be near lossless instead of lossless. However, compared with a quantization step, the information loss caused by the transform step may be insignificant or unnoticeable, thus the transform without quantization encoding scheme 300 may also be deemed herein as a lossless coding scheme.

Transform coefficients generated by the transform module 330 may be scanned and encoded by the entropy encoder 340 into an encoded bitstream. The entropy encoder 340 may be the same or similar with the entropy encoder 130. To facilitate continuous encoding of video frames, the transform coefficients may also be fed into the inverse transform module 350, which may perform the inverse of the transform module 330 and generate an exact version (i.e., lossless) or an approximation (i.e., near lossless) of the residual block. Then, the residual block may be fed into the reconstruction module 360, which may generate either reference pixels for intra prediction of future blocks or reference frames for inter prediction of future frames. The reconstruction module 360 may be the same or similar to the reconstruction module 140 in FIG. 1. Prior to transmission from the encoder, the encoded bitstream may include other information, such as video resolution, frame rate, block partitioning information (sizes, coordinates), prediction modes, etc., so that the encoded sequence of video frames may be properly decoded.

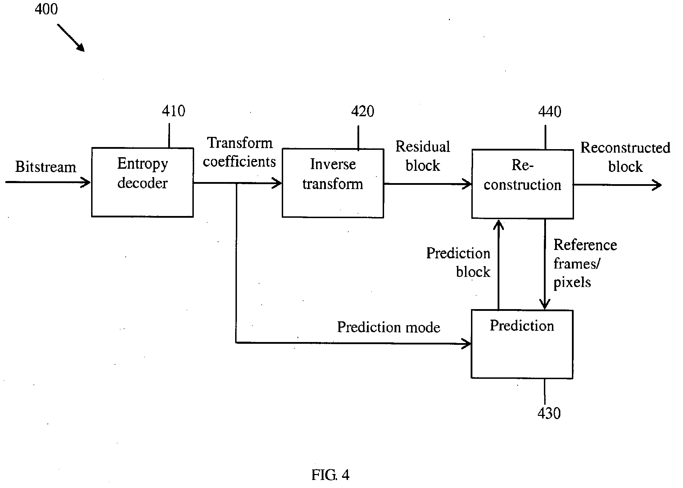

FIG. 4 illustrates an embodiment of a transform without quantization decoding scheme 400, which may be implemented in a video decoder. The without quantization decoding scheme 400 may correspond to the transform without quantization encoding scheme 300, and may comprise an entropy decoder 410, an inverse transform module 420, a prediction module 430, and a reconstruction module 440 arranged as shown in FIG. 4. In operation, an encoded bitstream containing information of a sequence of video frames may be received by the entropy decoder 410, which may decode the bitstream to an uncompressed format. The entropy decoder 410 may be the same or similar to the entropy decoder 210 in FIG. 2.

After execution of the entropy decoder 410, a matrix of transform coefficients may be generated, which may then be fed into the inverse transform module 420. The inverse transform module 420 may convert the transform coefficients in a frequency domain to residual pixel values in a spatial domain. In use, depending on whether an algorithm used by the inverse transform module 420 is fully reversible, an exact version (i.e., lossless) or an approximation (i.e., near lossless) of the residual block may be generated. The inverse transform module 420 may be the same or similar with the inverse transform module 350 in FIG. 3.

In addition, information containing a prediction mode of the current block may also be decoded by the entropy decoder 410. Based on the prediction mode, the prediction module 430 may generate a prediction block for the current block. The prediction module 430 may be the same or similar with the prediction module 220 in FIG. 2. Then, the reconstruction module 440 may combine the residual block with the prediction block to generate a reconstructed block. Additionally, to facilitate continuous decoding of video frames, the reconstructed block may be used in a reference frame to inter predict future frames. Some pixels of the reconstructed block may also serve as reference pixels for intra prediction of future blocks in the same frame.

In use, if an original block is encoded and decoded using near lossless schemes, such as the transform without quantization encoding scheme 300 and the transform without quantization decoding scheme 400, only slight distortion may be induced in the coding process. Thus, barring significant distortion caused during transmission, a reconstructed block may be almost the same with the original block. Transform without quantization coding schemes may be desired sometimes, as they may achieve higher compression ratio than the transform bypass schemes, without noticeable sacrifice of coding fidelity, which may greatly facilitate real-time encoding process.

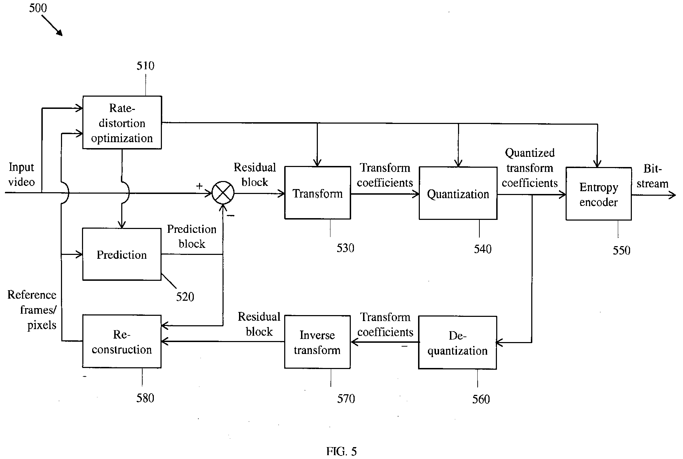

Sometimes it may be unnecessary to code an entire video frame using a lossless mode. For example, regions containing natural-view contents (e.g., captured by a camera) in a compound video may not require lossless coding, because the original video quality may already be limited, or because distortion due to lossy coding may not be significant or noticeable. FIG. 5 illustrates an embodiment of a lossy encoding scheme 500, which may be the same or similar with encoding schemes used in current HMs. The lossy encoding scheme 500 may comprise a RDO module 510, a prediction module 520, a transform module 530, a quantization module 540, an entropy encoder 550, a de-quantization module 560, an inverse transform module 570, and a reconstruction module 580. Some aspects of the lossy encoding scheme 500 may be the same or similar to the transform without quantization encoding scheme 300 in FIG. 3, thus the similar aspects will not be further described in the interest of clarity.

The lossy encoding scheme 500 may be implemented in a video encoder, which may receive a sequence of video frames. The RDO module 510 may be configured to control one or more of other modules. Based on logic decisions made by the RDO module 510, the prediction module 520 may utilize either reference frames or reference pixels to generate a prediction block. Then, a current block from the input video may be subtracted by the prediction block to generate a residual block. The residual block may be fed into the transform module 530, which may convert residual pixel values into a matrix of transform coefficients.

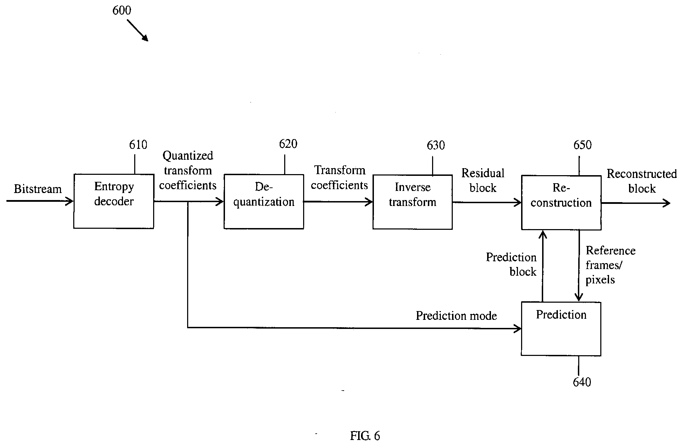

In contrast to the transform without quantization encoding scheme 300, in the lossy encoding scheme 500, the transform coefficients may be quantized by the quantization module 540 before being fed into the entropy encoder 550. The quantization module 540 may alter the scale of the transform coefficients and round them to integers, which may reduce the number of non-zero coefficients. Consequently, a compression ratio may be increased at a cost of information loss. Quantized transform coefficients generated by the quantization module 540 may be scanned and encoded by the entropy encoder 550 into an encoded bitstream. The quantized transform coefficients may also be fed into the de-quantization module 560 to recover the original scale of the transform coefficients. Then, the inverse transform module 570 may perform the inverse of the transform module 530 and generate a noisy version of the original residual block. Then, the lossy residual block may be fed into the reconstruction module 580, which may generate either reference pixels for intra prediction of future blocks or reference frames for inter prediction of future frames. FIG. 6 illustrates an embodiment of a lossy decoding scheme 600, which may be implemented in a video decoder. The lossy decoding scheme 600 may correspond to the lossy encoding scheme 500, and may comprise an entropy decoder 610, a de-quantization module 620, an inverse transform module 630, a prediction module 640, and a reconstruction module 650 arranged as shown in FIG. 6. In operation, an encoded bitstream containing information of a sequence of video frames may be received by the entropy decoder 610, which may decode the bitstream to an uncompressed format. A matrix of quantized transform coefficients may be generated, which may then be fed into the de-quantization module 620, which may be the same or similar to the de-quantization module 560 in FIG. 5. Then, output of the de-quantization module 620 may be fed into the inverse transform module 630, which may convert transform coefficients to residual values of a residual block. In addition, information containing a prediction mode of the current block may also be decoded by the entropy decoder 610. Based on the prediction mode, the prediction module 640 may generate a prediction block for the current block. Then, the reconstruction module 650 may combine the residual block with the prediction block to generate a reconstructed block. Additionally, to facilitate continuous decoding, the reconstructed block may be used in a reference frame to inter predict future frames. Some pixels of the reconstructed block may also serve as reference pixels for intra prediction of future blocks in the same frame.

In an embodiment, if desired, all of the aforementioned encoding schemes, including the transform bypass encoding scheme 100, the transform without quantization encoding scheme 300, and the lossy encoding scheme 500, may be implemented in a single encoder. For example, when encoding a compound video, the encoder may receive information regarding which regions should be encoded in a lossless mode and/or which regions should be encoded in a lossy mode. Based on the information, the encoder may encode certain regions using a lossy mode and other regions using a lossless mode. In the lossless mode, a RDO module (e.g., the RDO module 110 in FIG. 1) of the encoder may determine whether to bypass a transform step, after comparing bitstream lengths resulted by the transform bypass encoding scheme 100 and the transform without quantization encoding scheme 300. Similarly, if desired, all of the aforementioned decoding schemes, including the transform bypass decoding scheme 200, the transform without quantization decoding scheme 400, and the lossy decoding scheme 600, may be implemented in a single decoder.

For a decoder to properly reconstruct an encoded video frame, it should recognize one or more encoding schemes that have been used to encode the video frame. Since lossless encoding may be applied only on some regions of the video frame (referred to hereinafter as lossless encoding regions), lossy encoding may be applied on the other regions (referred to hereinafter as lossy or regular encoding regions). Information signaling lossless encoding regions and/or lossy encoding regions may be conveyed in a bitstream that carries the encoded video frame. In use, such information may be packed in a high level syntax structure, such as a sequence parameter set (SPS) or a picture parameter set (PPS) of the bitstream. A SPS or PPS may be a key normative part of the bitstream, and may be defined by a video coding standard. After receiving of the bitstream, the decoder may extract region indication information from the SPS or PPS, and then reconstruct each region according to its encoding mode. In an embodiment, the SPS or PPS may include a number of rectangular lossless encoding regions as well as information identifying their positions in the video frame (e.g., top-left and bottom-right coordinates, or top-right and bottom-left coordinates). In another embodiment, the SPS or PPS may include a number of rectangular lossy encoding regions as well as information identifying their positions in the video frame (e.g., top-left and bottom-right coordinates, or top-right and bottom-left coordinates).

In some applications, such as sharing a screen during a video conference, certain regions of a video may remain stable without any content change across a plurality of video frames. In this case, region indication information may only change at a relatively low frequency (e.g., once in tens of seconds), thus bitrate overhead caused by this signaling method may be negligible. Within a lossless encoding region, a transform bypass scheme and/or a transform without quantization scheme may be used. To allow proper decoding, a bitstream may also contain information regarding which blocks have been encoded via the transform bypass scheme and which blocks via the transform without quantization scheme. In an embodiment, two transform bypass flags may be introduced for each PU in the lossless encoding region. A luminance (luma) transform bypass flag may indicate whether a transform step is bypassed (or skipped) in the coding of luma pixels of a PU, and a chrominance (chroma) transform bypass flag may indicate whether a transform step is bypassed in the coding of chroma pixels of the PU. For example, if a transform module (e.g., the transform module 330 in FIG. 3) is bypassed for the luma pixels, the luma transform bypass flag may be set to '1'. Otherwise, if the transform module is used and a quantization module (e.g., the quantization module 540) is bypassed, the luma transform bypass flag may be set to '0'. Alternatively, if desired, the luma transform bypass flag may be set to '0' if the transform module is bypassed, and '1' if the transform module is used. The chroma transform bypass flag may be set using a same or similar approach with the luma transform bypass flag.

Both the luma and chroma transform bypass flags may be encoded by an entropy encoder (e.g., the entropy encoder 130 in FIG. 1). The entropy encoder may use a CABAC algorithm, which may use a plurality of context models. In an embodiment, three context models may be used for each of the luma and chroma transform bypass flags. To improve coding efficiency, the entropy encoder may select a context model based on an index, which may be correlated to transform bypass flags of adjacent PUs. Consider, for example, the coding of a luma transform bypass flag for a current PU, with the assumption that a chroma transform bypass flag for the current PU may be coded in a same or similar way. Two adjacent PUs-an upper PU and a left PU may also have luma transform bypass flags. A sum of the two luma transform bypass flags may be configured to be the index of the context models. If either the upper PU or the left PU does not have a luma transform bypass flag (e.g., the current PU on a boundary of a lossless encoding region), '0' may be assigned to the luma transform bypass flag. After entropy encoding using the selected context model, the encoded luma and chroma transform flags may be included into the bit stream.

In an embodiment, the luma and chroma components of a PU may share a same lossless coding scheme, and both components may bypass or include a transform step in their coding process. In this case, a single transform bypass flag may be used for both components. Compared with separate transform bypass flags for the luma and chroma components, the single transform bypass flag may lead to less signaling overhead in the bitstream. Moreover, it should be noted that, although transform bypass flags (luma and/or chroma) are set on the PU level in the descriptions above, if desired, the transform bypass flags may also be similarly set on a TU level, which may result in finer granularity but more signaling overhead.

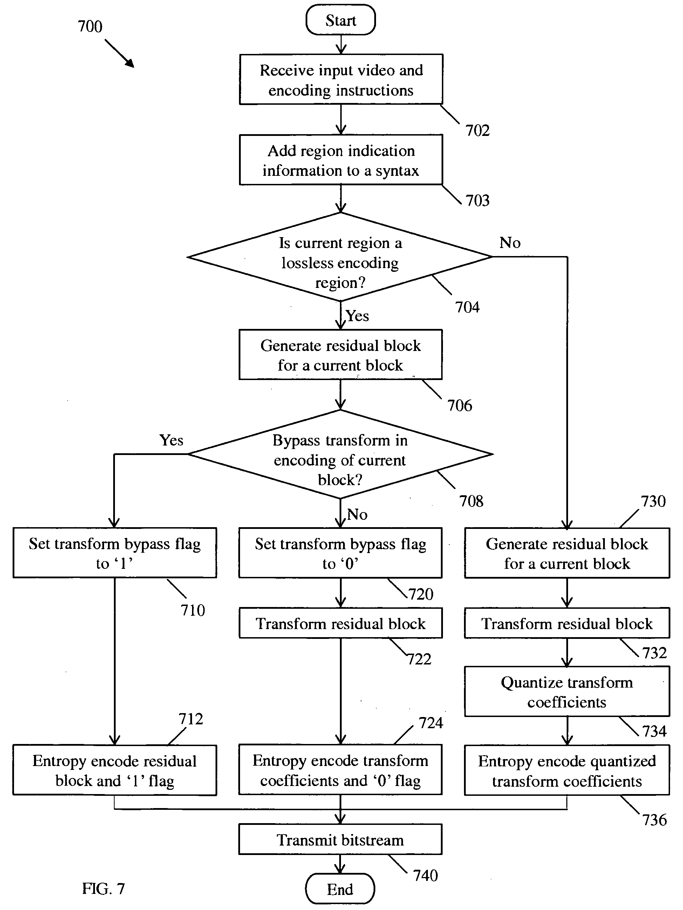

FIG. 7 is a flowchart of an embodiment of an encoding method 700, which may implement some or all of the aforementioned encoding schemes in a video encoder. The method 700 may start in step 702, where an input video comprising a sequence of video frames or slices may be received. For each frame or a set of frames, information or instructions indicating one or more lossless encoding regions and/or lossy encoding regions may also be received. Next, in step 703, region indication information may be added to a high level syntax of the compressed bitstream, which may identify these lossless encoding regions and/or lossy encoding regions. The syntax may be included in the SPS or PPS of a bitstream. In an embodiment, the region indication information may include a number of rectangular lossless encoding regions and their positions in the video frame (e.g., top-left and bottom-right coordinates, or top-right and bottom-left coordinates). In another embodiment, the region indication information may include a number of rectangular lossy encoding regions and their positions in the video frame (e.g., top-left and bottom-right coordinates, or top-right and bottom-left coordinates). Next, in step 704, based on received information, the method 700 may determine if a region (e.g., rectangular) currently being encoded is a lossless encoding region. If the condition in the block 704 is met, the method 700 may proceed to step 706 to encode the current region in a lossless mode (e.g., using the transform bypass encoding scheme 100 and/or the transform without quantization encoding scheme 300). Otherwise, the method 700 may proceed to step 730 to encode the current region in a lossy mode (e.g., using the lossy encoding scheme 500).

Next, in step 706, a residual block may be generated for each block of the current region. To generate the residual block, a RDO module (e.g., the RDO module 110 in FIG. 1) may make logic decisions, such as selecting a best block partitioning scheme for the current region, as well as determining a best inter or intra prediction mode for a current block (e.g., a PU). Based on logic decisions of the RDO module, a prediction module (e.g., the prediction module 120) may generate a prediction block, which may then be subtracted from the current block to obtain the residual block.

Next, in step 708, the method 700 may determine if a transform step should be bypassed for luma and/or chroma components of the current block, which may be implemented through the RDO module. If the condition in the block 708 is met, the method 700 may proceed to step 710, where one or more transform bypass flags for the current block may be set to '1'. Otherwise, the method 700 may proceed to step 720, where the one or more transform bypass flags may be set to '0'. The binary value may be arbitrary set. For example, if desired, the one or more transform bypass flags may be set to '0' in step 710 and '1' in step 720. In use, luma and chroma components may use separate transform bypass flags. If the two components always use a same encoding scheme, they may also share a transform bypass flag.

Step 710 may be followed by step 712, where the residual block may be encoded using an entropy encoder (e.g., the entropy encoder 130 in FIG. 1) into a compressed bitstream. The entropy encoder may use any suitable algorithm, such as a CABAC algorithm. In addition, the one or more '1' transform bypass flags may be encoded by the entropy encoder. In an embodiment, three context models may be used for each of the luma and chroma components. Step 720 may be followed by step 722, where the residual block may be converted in a transform module (e.g., the transform module 330 in FIG. 3) into a two-dimensional matrix of transform coefficients. The transform module may use any suitable transform, such as an integer DCT transform and integer DCT-like transform. Next, in step 724, the transform coefficients may be encoded using an entropy encoder (e.g., the entropy encoder 340 in FIG. 3) into a compressed bitstream. In addition, the one or more '0' transform bypass flags may be encoded by the entropy encoder.

If a lossy encoding mode is chosen for the current region in step 704, the method 700 may proceed to step 730, where a residual block may be generated for each block of the current region. To generate the residual block, a RDO module (e.g., the RDO module 510 in FIG. 5) may select a block partitioning scheme for the current region and an inter or intra prediction mode for a current block (e.g., a PU). Based on logic decisions of the RDO module, a prediction module (e.g., the prediction module 520) may generate a prediction block, which may then be subtracted from the current block to obtain the residual block. Next, in step 732, the residual block may be converted in a transform module (e.g., the transform module 530) into a matrix of transform coefficients. Next, in step 734, the matrix may be quantized in a quantization module (e.g., the quantization module 540) into another matrix of quantized transform coefficients. Next, in step 736, the quantized transform coefficients may be encoded using an entropy encoder (e.g., the entropy encoder 550) into the bitstream which may already have the region indication information.

Each block of the current region may be encoded using some of steps 702-736. In an embodiment, after encoding all blocks in the current region, in step 740, the compressed bitstream may be transmitted, for example, over a network to a decoder. It should be understood that the method 700 may only include a portion of all necessary encoding steps, thus other steps, such as de-quantization and inverse transform, may also be incorporated into the encoding process wherever necessary.

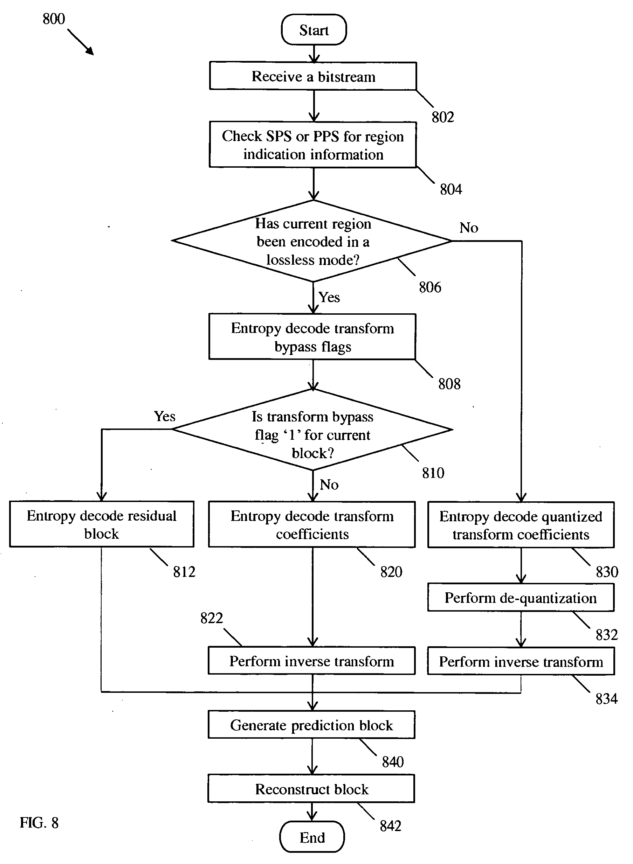

FIG. 8 is a flowchart of an embodiment of a decoding method 800, which may correspond to the encoding method 700 and may implement some or all of the aforementioned decoding schemes in a video decoder. The method 800 may start in step 802, where a bitstream comprising a sequence of video frames may be received. Next, in step 804, a high level syntax (e.g., SPS or PPS) of the bitstream may be checked for region indication information, which may signal which regions in a frame or a set of frames have been encoded in a lossless mode. Next, in step 806, based on the region indication information, the method 800 may determine if a region (e.g., rectangular) currently being decoded has been encoded in a lossless mode. If the condition in the block 806 is met, the method 800 may proceed to step 808 to decode the current region in a lossless mode (e.g., using the transform bypass decoding scheme 200 and/or the transform without quantization decoding scheme 400). Otherwise, the method 800 may proceed to step 830 to decode the current region in a lossy mode (e.g., using the lossy decoding scheme 500).

For each block of the current region, in step 808, one or more encoded transform bypass flags may be decoded in an entropy decoder (e.g., the entropy decoder 210 in FIG. 2), which may perform the inverse of an entropy encoder. If luma and chroma components of a current block use separate transform bypass flags, two flags may be decoded for the current block. Alternatively, if the luma and chroma components share a transform bypass flag, one flag may be decoded. Next, in step 810, the method 800 may determine if the transform bypass flag is '1'. As mentioned above, a transform bypass flag of '1' may indicate that a transform step has been bypassed in the encoding process of the current block, and a transform bypass flag of '0' may indicate that a transform step has been used without quantization. It should be understood that the binary value here may be interpreted based on a corresponding encoding method (e.g., the method 700). For example, if the method 700 reverses the meaning of '1' and '0', the method 800 may also be adjusted accordingly. If the condition in the block 810 is met, the method 800 may proceed to step 812, where a residual block of the current block may be decoded using the entropy decoder into an uncompressed format. Otherwise, the method 800 may proceed to step 820, where a matrix of transform coefficients may be decoded using the entropy decoder. Step 820 may be followed by step 822, where the transform coefficients may be converted to a residual block of the current block using an inverse transform module (e.g., the inverse transform module 420 in FIG. 4).

If the current region needs to be decoded in a lossy decoding mode (determined by block 806), the method 800 may proceed to step 830, where a matrix of quantized transform coefficients may be decoded in an entropy decoder (e.g., the entropy decoder 610 in FIG. 6). Next, in step 832, the quantized transform coefficients may be de-quantized to recover an original scale of the transform coefficients. Next, in step 834, the transform coefficients may be inverse transformed to a residual block of the current block.

After obtaining the residual block using either a lossless or lossy decoding mode, in step 840, a prediction block may be generated. The prediction block may be based on information (decoded from the bitstream using the entropy encoder) comprising a prediction mode, as well as one or more previously coded frames or blocks. Next, in step 842, the residual block may be added to the prediction block, thus generating a reconstructed block. Depending on the encoding and decoding schemes used, the reconstructed block may be an exact, approximate, or noisy version of the original block (before encoding). Barring distortion introduced during transmission, all information from the original block may be preserved in transform bypass coding. Depending on properties of transform and inverse transform, all (or nearly all) information may be preserved in transform without quantization coding. Certain information may be lost in lossy coding, and the degree of loss may mostly depend on the quantization and de-quantization steps. To facilitate continuous decoding of blocks, some pixels of the reconstructed block may also serve as reference pixels for decoding of future blocks. Likewise, the current frame may also serve as a reference frame for decoding of future frames.

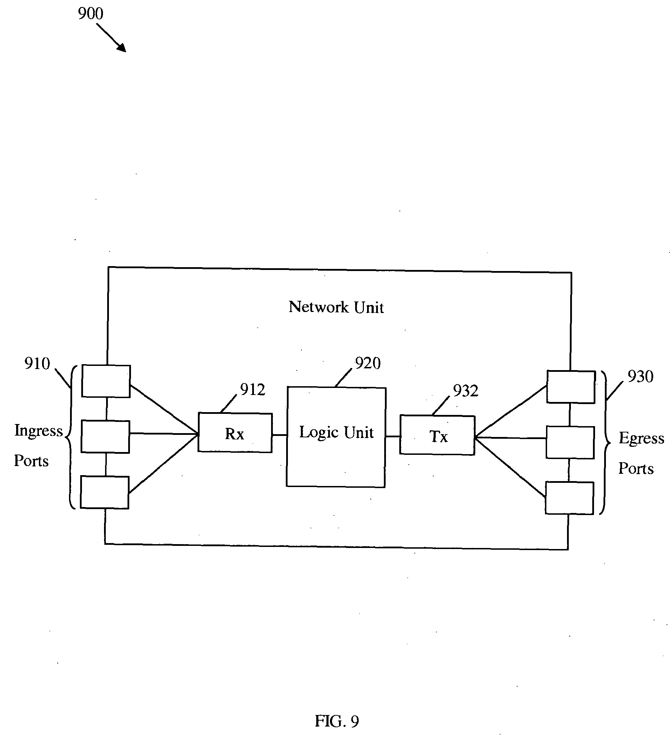

FIG. 9 illustrates an embodiment of a network unit 900, which may comprise an encoder and decoder that processes video frames as described above, for example, within a network or system. The network unit 900 may comprise a plurality of ingress ports 910 and/or receiver units (Rx) 912 for receiving data from other network units or components, logic unit or processor 920 to process data and determine which network unit to send the data to, and a plurality of egress ports 930 and/or transmitter units (Tx) 932 for transmitting data to the other network units. The logic unit or processor 920 may be configured to implement any of the schemes described herein, such as the transform bypass encoding scheme 100, the transform without quantization encoding scheme 300, and/or at least one of the encoding method 700 and the decoding method 800. The logic unit 920 may be implemented using hardware, software, or both.

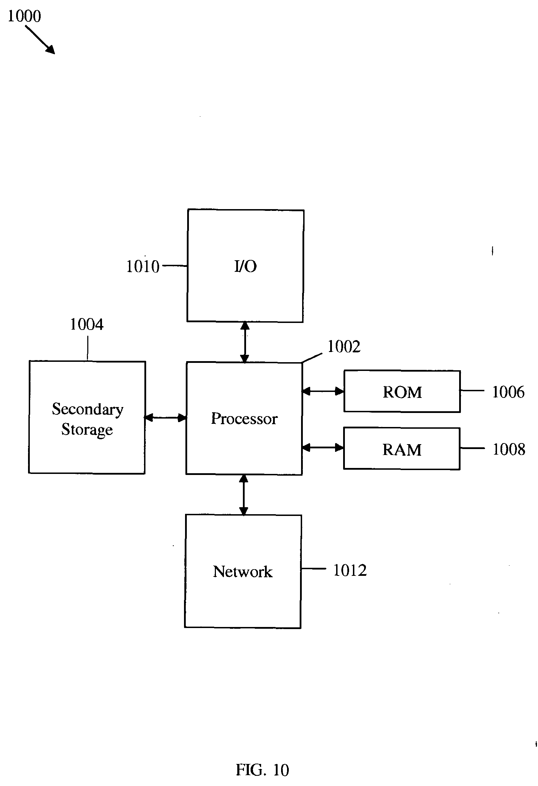

The schemes described above may be implemented on any general-purpose network component, such as a computer or network component with sufficient processing power, memory resources, and network throughput capability to handle the necessary workload placed upon it. FIG. 10 illustrates a schematic diagram of a typical, general-purpose network component or computer system 1000 suitable for implementing one or more embodiments of the methods disclosed herein, such as the encoding method 700 and the decoding method 800. The general-purpose network component or computer system 1000 includes a processor 1002 (which may be referred to as a central processor unit or CPU) that is in communication with memory devices including secondary storage 1004, read only memory (ROM) 1006, random access memory (RAM) 1008, input/output (I/O) devices 1010, and network connectivity devices 1012. Although illustrated as a single processor, the processor 1002 is not so limited and may comprise multiple processors. The processor 1002 may be implemented as one or more CPU chips, cores (e.g., a multi-core processor), field-programmable gate arrays (FPGAs), application specific integrated circuits (ASICs), and/or digital signal processors (DSPs), and/or may be part of one or more ASICs. The processor 1002 may be configured to implement any of the schemes described herein, including the transform bypass encoding scheme 100, the transform without quantization encoding scheme 300, and/or at least one of the encoding method 700 and the decoding method 800. The processor 1002 may be implemented using hardware, software, or both.

The secondary storage 1004 is typically comprised of one or more disk drives or tape drives and is used for non-volatile storage of data and as an over-flow data storage device if the RAM 1008 is not large enough to hold all working data. The secondary storage 1004 may be used to store programs that are loaded into the RAM 1008 when such programs are selected for execution. The ROM 1006 is used to store instructions and perhaps data that are read during program execution. The ROM 1006 is a non-volatile memory device that typically has a small memory capacity relative to the larger memory capacity of the secondary storage 1004. The RAM 1008 is used to store volatile data and perhaps to store instructions. Access to both the ROM 1006 and the RAM 1008 is typically faster than to the secondary storage 1004.

At least one embodiment is disclosed and variations, combinations, and/or modifications of the embodiment(s) and/or features of the embodiment(s) made by a person having ordinary skill in the art are within the scope of the disclosure. Alternative embodiments that result from combining, integrating, and/or omitting features of the embodiment(s) are also within the scope of the disclosure. Where numerical ranges or limitations are expressly stated, such express ranges or limitations should be understood to include iterative ranges or limitations of like magnitude falling within the expressly stated ranges or limitations (e.g., from about 1 to about 10 includes, 2, 3, 4, etc.; greater than 0.10 includes 0.11, 0.12, 0.13, etc.). For example, whenever a numerical range with a lower limit, Rₗ, and an upper limit, Rᵤ, is disclosed, any number falling within the range is specifically disclosed. In particular, the following numbers within the range are specifically disclosed: R = Rₗ + k * (Rᵤ - Rₗ), wherein k is a variable ranging from 1 percent to 100 percent with a 1 percent increment, i.e., k is 1 percent, 2 percent, 3 percent, 4 percent, 7 percent, ..., 70 percent, 71 percent, 72 percent, ..., 95 percent, 96 percent, 97 percent, 98 percent, 99 percent, or 100 percent. Moreover, any numerical range defined by two R numbers as defined in the above is also specifically disclosed. The use of the term about means ±10% of the subsequent number, unless otherwise stated. Use of the term "optionally" with respect to any element of a claim means that the element is required, or alternatively, the element is not required, both alternatives being within the scope of the claim. Use of broader terms such as comprises, includes, and having should be understood to provide support for narrower terms such as consisting of, consisting essentially of, and comprised substantially of. Accordingly, the scope of protection is not limited by the description set out above but is defined by the claims that follow, that scope including all equivalents of the subject matter of the claims. Each and every claim is incorporated as further disclosure into the specification and the claims are embodiment(s) of the present disclosure. The discussion of a reference in the disclosure is not an admission that it is prior art, especially any reference that has a publication date after the priority date of this application. The disclosure of all patents, patent applications, and publications cited in the disclosure are hereby incorporated by reference, to the extent that they provide exemplary, procedural, or other details supplementary to the disclosure.

While several embodiments have been provided in the present disclosure, it may be understood that the disclosed systems and methods might be embodied in many other specific forms. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and may be made without departing from the spirit and scope disclosed herein.

## Claims

1. An apparatus used in video encoding comprising:
a processor configured to:
receive a video frame which comprises a compound video;
select at least one region containing text and/or graphics in the video frame;
bypass a quantization step in encoding of the at least one region;
for a current block in the at least one region,
generate a prediction block;
subtract the current block by the prediction block to generate a residual block;
selectively bypass a transform step in encoding of the residual block; and
encoding another region containing natural-view content in the video frame using a lossy mode;
wherein the residual block comprises a plurality of residual values; and wherein the processor is further configured to:
if the transform step is bypassed,
perform entropy encoding on at least a portion of the plurality of residual values to generate encoded residual values;
otherwise,
transform the residual block to a transform matrix comprising a plurality of transform coefficients; and
perform entropy encoding on the plurality of transform coefficients to generate a plurality of encoded transform coefficients; and
the processor is further configured to:
transmit the encoded at least one region in a bitstream; and
add region indication information to a syntax of the bitstream, wherein the region indication information identifies the at least one region;
wherein the apparatus is **characterized by** that the processor is further configured to:
set at least one transform bypass flag for the current block;
perform entropy encoding on the at least one transform bypass flag to generate at least one encoded transform bypass flag; and
add the at least one encoded transform bypass flag to the bitstream; and
wherein performing entropy encoding on the at least one transform bypass flag includes using three context models for each of the at least one transform bypass flag, wherein the three context models are selectable via an index equal to a sum of a first transform bypass flag belonging to an upper block of the current block and a second transform bypass flag belonging to a left block of the current block.

2. The apparatus of claim 1, wherein the syntax comprises a sequence parameter set (SPS) or a picture parameter set (PPS), wherein the region indication information comprises:
a number of one or more lossless encoding regions; and
a plurality of coordinates for each of the one or more lossless encoding regions to indicate its position within the video frame.

3. The apparatus of claim 1, wherein the syntax comprises a SPS or a PPS, wherein the region indication information comprises:
a number of one or more lossy encoding regions; and
a plurality of coordinates for each of the one or more lossy encoding regions to indicate its position within the video frame.

4. A method used in video encoding comprising:
receiving a video frame which comprises a compound video;
selecting at least one region containing text and/or graphics in the video frame;
bypassing a quantization step in encoding of the at least one region;
for a current block in the at least one region,
generating a prediction block;
subtracting the current block by the prediction block to generate a residual block;
selectively bypassing a transform step in encoding of the residual block; and
encoding another region containing natural-view content in the video frame using a lossy mode;
wherein the residual block comprises a plurality of residual values, and wherein the method further comprises:
if the transform step is bypassed,
performing entropy encoding on at least a portion of the plurality of residual values to generate encoded residual values;
otherwise,
transforming the residual block to a transform matrix comprising a plurality of transform coefficients; and
performing entropy encoding on the transform coefficient to generate plurality of transform coefficients to generate a plurality of encoded transform coefficients;
transmitting the encoded at least one region in a bitstream; and
adding region indication information to a syntax of the bitstream, wherein the region indication information identifies the at least one region;
**characterized by** that **the** method further comprising:
setting at least one transform bypass flag for the current block;
performing entropy encoding on the at least one transform bypass flag to generate at least one encoded transform bypass flag; and
adding the at least one encoded transform bypass flag to the bitstream; and
wherein performing entropy encoding on the at least one transform bypass flag includes using three context models for each of the at least one transform bypass flag, wherein the three context models are selectable via an index equal to a sum of a first transform bypass flag belonging to an upper block of the current block and a second transform bypass flag belonging to a left block of the current block.

5. The method of claim 4, wherein the at least one transform bypass flag is a single transform bypass flag applied to a luma component and a chroma component of the current block.

6. The method of claim 4, wherein the syntax comprises a sequence parameter set (SPS) or a picture parameter set (PPS), wherein the region indication information comprises:
a number of one or more lossless encoding regions; and
a plurality of coordinates for each of the one or more lossless encoding regions to indicate its position within the video frame.

7. The method of claim 4, wherein the syntax comprises a SPS or a PPS, wherein the region indication information comprises:
a number of one or more lossy encoding regions; and
a plurality of coordinates for each of the one or more lossy encoding regions to indicate its position within the video frame.

## Patentansprüche

1. Vorrichtung, die bei Videocodierung verwendet wird und umfasst:
einen Prozessor, der konfiguriert ist zum:
Empfangen eines Videoframes, der ein zusammengesetztes Video umfasst;
Auswählen mindestens einer Region mit Text und/oder Grafiken im Videoframe;
Umgehen eines Quantisierungsschritts beim Codieren der mindestens einen Region,
für einen aktuellen Block in der mindestens einen Region:
Erzeugen eines Prädiktionsblocks;
Subtrahieren des aktuellen Blocks durch den Prädiktionsblock, um einen Restblock zu erzeugen;
selektives Umgehen eines Transformationsschritts beim Codieren des Restblocks; und
Codieren einer anderen Region mit einer natürlichen Ansicht im Videoframe unter Verwendung eines verlustbehafteten Modus;
wobei der Restblock eine Mehrzahl von Restwerten umfasst; und wobei der Prozessor ferner konfiguriert ist zum:
wenn der Transformationsschritt umgangen wird,
Durchführen von Entropie-Codierung an mindestens einem Teil der Mehrzahl von Restwerten, um codierte Restwerte zu erzeugen;
andernfalls,
Transformieren des Restblocks in eine Transformationsmatrix, die eine Mehrzahl von Transformationskoeffizienten umfasst; und
Durchführen von Entropie-Codierung an der Mehrzahl von Transformationskoeffizienten, um eine Mehrzahl von codierten Transformationskoeffizienten zu erzeugen; und
wobei der Prozessor ferner konfiguriert ist zum:
Senden der codierten mindestens einen Region in einem Bitstrom; und
Hinzufügen von Regionsanzeigeinformationen zu einer Syntax des Bitstroms, wobei die Regionsanzeigeinformationen die mindestens eine Region identifizieren;
wobei die Vorrichtung **dadurch gekennzeichnet ist, dass** der Prozessor ferner konfiguriert ist zum:
Setzen mindestens eines Transformationsumgehungsflags für den aktuellen Block;
Durchführen von Entropie-Codierung an dem mindestens einen Transformationsumgehungsflag, um mindestens ein codiertes Transformationsumgehungsflag zu erzeugen; und
Hinzufügen des mindestens einen Transformationsumgehungsflags zum Bitstrom; und
wobei das Durchführen von Entropie-Codierung an dem mindestens einen Transformationsumgehungsflag ein Verwenden von drei Kontextmodellen für jedes des mindestens einen Transformationsumgehungsflags umfasst, wobei die drei Kontextmodelle über einen Index gleich einer Summe eines ersten Transformationsumgehungsflags, das zu einem oberen Block des aktuellen Bocks gehört, und eines zweiten Transformationsumgehungsflags, das zu einem linken Block des aktuellen Bocks gehört, ausgewählt werden können.

2. Vorrichtung nach Anspruch 1, wobei die Syntax einen Sequenzparametersatz (SPS) oder einen Bildparametersatz (PPS) umfasst, wobei die Regionsanzeigeinformationen umfassen:
eine Anzahl von einer oder mehreren verlustlosen Codierungsregionen; und
eine Mehrzahl von Koordinaten für jede der einen oder der mehreren verlustlosen Codierungsregionen, um ihre Position innerhalb des Videoframes anzuzeigen.

3. Vorrichtung nach Anspruch 1, wobei die Syntax einen SPS oder einen PPS umfasst, wobei die Regionsanzeigeinformationen umfassen:
eine Anzahl von einer oder mehreren verlustbehafteten Codierungsregionen; und
eine Mehrzahl von Koordinaten für jede der einen oder der mehreren verlustbehafteten Codierungsregionen, um ihre Position innerhalb des Videoframes anzuzeigen.

4. Verfahren, das bei Videocodierung verwendet wird und umfasst:
Empfangen eines Videoframes, der ein zusammengesetztes Video umfasst;
Auswählen mindestens einer Region mit Text und/der Grafiken im Videoframe;
Umgehen eines Quantisierungsschritts beim Codieren der mindestens einen Region,
für einen aktuellen Block in der mindestens einen Region:
Erzeugen eines Prädiktionsblocks;
Subtrahieren des aktuellen Blocks durch den Prädiktionsblock, um einen Restblock zu erzeugen;
selektives Umgehen eines Transformationsschritts beim Codieren des Restblocks; und
Codieren einer anderen Region mit einer natürlichen Ansicht im Videoframe unter Verwendung eines verlustbehafteten Modus;
wobei der Restblock eine Mehrzahl von Restwerten umfasst; und wobei das Verfahren ferner umfasst:
wenn der Transformationsschritt umgangen wird,
Durchführen von Entropie-Codierung an mindestens einem Teil der Mehrzahl von Restwerten, um codierte Restwerte zu erzeugen;
andernfalls,
Transformieren des Restblocks in eine Transformationsmatrix, die eine Mehrzahl von Transformationskoeffizienten umfasst; und
Durchführen von Entropie-Codierung an der Mehrzahl von Transformationskoeffizienten, um eine Mehrzahl von codierten Transformationskoeffizienten zu erzeugen;
Senden der codierten mindestens einen Region in einem Bitstrom; und
Hinzufügen von Regionsanzeigeinformationen zu einer Syntax des Bitstroms, wobei die Regionsanzeigeinformationen die mindestens eine Region identifizieren;
**dadurch gekennzeichnet, dass** das Verfahren ferner umfasst:
Setzen mindestens eines Transformationsumgehungsflags für den aktuellen Block;
Durchführen von Entropie-Codierung an dem mindestens einen Transformationsumgehungsflag, um mindestens ein codiertes Transformationsumgehungsflag zu erzeugen; und
Hinzufügen des mindestens einen Transformationsumgehungsflags zum Bitstrom; und
wobei das Durchführen von Entropie-Codierung an dem mindestens einen Transformationsumgehungsflag ein Verwenden von drei Kontextmodellen für jedes des mindestens einen Transformationsumgehungsflags umfasst, wobei die drei Kontextmodelle über einen Index gleich einer Summe eines ersten Transformationsumgehungsflags, das zu einem oberen Block des aktuellen Bocks gehört, und eines zweiten Transformationsumgehungsflags, das zu einem linken Block des aktuellen Bocks gehört, ausgewählt werden können.

5. Verfahren nach Anspruch 4, wobei das mindestens eine Transformationsumgehungsflag ein einziges Transformationsumgehungsflag ist, das auf eine Luminanzkomponente und eine Chrominanzkomponente des aktuellen Blocks angewendet wird.

6. Verfahren nach Anspruch 4, wobei die Syntax einen Sequenzparametersatz (SPS) oder einen Bildparametersatz (PPS) umfasst, wobei die Regionsanzeigeinformationen umfassen:
eine Anzahl von einer oder mehreren verlustlosen Codierungsregionen; und
eine Mehrzahl von Koordinaten für jede der einen oder der mehreren verlustlosen Codierungsregionen, um ihre Position innerhalb des Videoframes anzuzeigen.

7. Verfahren nach Anspruch 4, wobei die Syntax einen SPS oder einen PPS umfasst, wobei die Regionsanzeigeinformationen umfassen:
eine Anzahl von einer oder mehreren verlustbehafteten Codierungsregionen; und
eine Mehrzahl von Koordinaten für jede der einen oder der mehreren verlustbehafteten Codierungsregionen, um ihre Position innerhalb des Videoframes anzuzeigen.

## Revendications

1. Appareil utilisé dans un codage vidéo comprenant :
un processeur configuré pour :
recevoir une trame vidéo qui comporte une vidéo composite ;
sélectionner au moins une région contenant du texte et/ou des graphiques dans la trame vidéo ;
outrepasser une étape de quantification dans le codage de ladite région ;
pour un bloc courant dans ladite région,
générer un bloc de prédiction,
soustraire le bloc courant par le bloc de prédiction pour générer un bloc résiduel ;
outrepasser sélectivement une étape de transformation dans le codage du bloc résiduel ; et
coder une autre région contenant un contenu de vue naturelle dans la trame vidéo en utilisant un mode avec perte ;
le bloc résiduel comportant une pluralité de valeurs résiduelles ; et le processeur étant en outre configuré pour :
si l'étape de transformation est outrepassée,
exécuter un codage entropique sur au moins une partie de la pluralité de valeurs résiduelles pour générer des valeurs résiduelles codées ;
sinon,
transformer le bloc résiduel en une matrice de transformation comprenant une pluralité de coefficients de transformation ; et
exécuter un codage entropique sur la pluralité de coefficients de transformation pour générer une pluralité de coefficients de transformation codés ; et
le processeur est en outre configuré pour :
transmettre ladite région codée dans un flux binaire ; et
ajouter des informations d'indication de région à une syntaxe du flux binaire, les informations d'indication de région identifiant ladite région ;
l'appareil étant **caractérisé en ce que** le processeur est en outre configuré pour :
positionner au moins un drapeau d'outrepassement de transformation pour le bloc courant ;
exécuter un codage entropique sur ledit drapeau d'outrepassement de transformation pour générer au moins un drapeau d'outrepassement de transformation codé ; et
ajouter ledit drapeau d'outrepassement de transformation codé dans le flux binaire ; et
l'étape consistant à exécuter un codage entropique sur ledit drapeau d'outrepassement de transformation comprenant : utiliser trois modèles de contexte pour chacun dudit drapeau d'outrepassement de transformation, les trois modèles de contexte étant sélectionnables par l'intermédiaire d'un index égal à une somme d'un premier drapeau d'outrepassement de transformation appartenant à un bloc supérieur du bloc courant et d'un deuxième drapeau d'outrepassement de transformation appartenant à un bloc restant du bloc courant.

2. Appareil selon la revendication 1, dans lequel la syntaxe comprend un ensemble de paramètres de séquence (SPS) ou un ensemble de paramètres d'image (PPS), les informations d'indication de région comprenant :
un nombre d'une ou plusieurs régions de codage sans perte ; et
une pluralité de coordonnées pour chacune des une ou plusieurs régions de codage sans perte pour indiquer leur position à l'intérieur de la trame vidéo.

3. Appareil selon la revendication 1, dans lequel la syntaxe comprend un SPS ou un PPS, les informations d'indication de région comprenant :
un nombre d'une ou plusieurs régions de codage avec perte ; et
une pluralité de coordonnées pour chacune des une ou plusieurs régions de codage avec perte pour indiquer leur position à l'intérieur de la trame vidéo.

4. Procédé utilisé dans un codage vidéo comprenant les étapes suivantes :
recevoir une trame vidéo qui comporte une vidéo composite ;
sélectionner au moins une région contenant du texte et/ou des graphiques dans la trame vidéo ;
outrepasser une étape de quantification dans le codage de ladite région ;
pour un bloc courant dans ladite région,
générer un bloc de prédiction ;
soustraire le bloc courant par le bloc de prédiction pour générer un bloc résiduel ;
outrepasser sélectivement une étape de transformation dans le codage du bloc résiduel ; et
coder une autre région contenant un contenu de vue naturelle dans la trame vidéo en utilisant un mode avec perte ;
le bloc résiduel comportant une pluralité de valeurs résiduelles, et le procédé comprenant en outre :
si l'étape de transformation est outrepassée,
exécuter un codage entropique sur au moins une partie de la pluralité de valeurs résiduelles pour générer des valeurs résiduelles codées ;
sinon,
transformer le bloc résiduel en une matrice de transformation comportant une pluralité de coefficients de transformation ; et
exécuter un codage entropique sur le coefficient de transformation pour générer une pluralité de coefficients de transformation afin de générer une pluralité de coefficients de transformation codés ;
transmettre ladite région codée dans un flux binaire ; et
ajouter des informations d'indication de région à une syntaxe du flux binaire, les informations d'indication de région identifiant ladite région ;
**caractérisé en ce que** le procédé comprend en outre :
positionner au moins un drapeau d'outrepassement de transformation pour le bloc courant ;
exécuter un codage entropique sur ledit drapeau d'outrepassement de transformation pour générer au moins un drapeau d'outrepassement de transformation codé ; et
ajouter ledit drapeau d'outrepassement de transformation codé au flux binaire ; et
l'étape consistant à exécuter un codage entropique sur ledit drapeau d'outrepassement de transformation comprenant : utiliser trois modèles de contexte pour chacun dudit drapeau d'outrepassement de transformation, les trois modèles de contexte étant sélectionnables par l'intermédiaire d'un index égal à une somme d'un premier drapeau d'outrepassement de transformation appartenant à un bloc supérieur du bloc courant et d'un deuxième drapeau d'outrepassement de transformation appartenant à un bloc restant du bloc courant.

5. Procédé selon la revendication 4, dans lequel ledit drapeau d'outrepassement de transformation est un simple drapeau d'outrepassement de transformation appliqué à un composant de luminance et à un composant de chromie du bloc courant.

6. Procédé selon la revendication 4, dans lequel la syntaxe comprend un ensemble de paramètres de séquence (SPS) ou un ensemble de paramètres d'image (PPS), les informations d'indication de région comprenant :
un nombre d'une ou plusieurs régions de codage sans perte ; et
une pluralité de coordonnées pour chacune des une ou plusieurs régions de codage sans perte pour indiquer leur position à l'intérieur de la trame vidéo.

7. Procédé selon la revendication 4, dans lequel la syntaxe comporte un SPS ou un PPS, dans lequel les informations d'indication de région comprennent :
un nombre d'une ou plusieurs régions de codage avec perte ; et
une pluralité de coordonnées pour chacune des une ou plusieurs régions de codage avec perte pour indiquer leur position à l'intérieur de la trame vidéo.
